# EUROPÄISCHE PATENTSCHRIFT

(11) **EP 2 037 769 B1**
(45) Veröffentlichungstag und Bekanntmachung des Hinweises auf die Patenterteilung: **09.09.2020**
(21) Anmeldenummer: 07785626.8
(22) Anmeldetag: 12.07.2007
(51) Int. Cl.: A45C 3/00, A45F 3/04, B29C 65/00, B29C 65/02, A45C 13/10, B29C 65/04, B29C 65/78, B29L 31/00

(54) **RUCKSACK, TASCHE ODER BEHÄLTER**
RUCKSACK, BAG OR CONTAINER
SAC À DOS, SAC OU CONTENANT

(30) Priorität: 12.07.2006 DE 202006010865 U
(43) Veröffentlichungstag der Anmeldung: 25.03.2009
(73) Patentinhaber: Ortlieb, Hartmut, 91560 Heilsbronn (DE)
(72) Erfinder: Ortlieb, Hartmut, 91560 Heilsbronn (DE)
(74) Vertreter: Schuhmann, Albrecht
(86) Internationale Anmeldenummer: PCT/DE2007/001252
(87) Internationale Veröffentlichungsnummer: WO 2008/006360

(56) Entgegenhaltungen:
- WO-A-99/32008
- DE-U1-202004 015 475
- US-A- 3 578 115

## Beschreibung

Die vorliegende Erfindung betrifft einen Rucksack, eine Tasche oder einen Behälter mit den Merkmalen des Oberbegriffs des Anspruchs 1.

Im Bereich von Rucksäcken, Taschen und Behälter sind zahlreiche Ausführungsformen bekannt und auf dem Markt erhältlich. Es sind z.B. stabile Taschen und Rucksäcke bekannt, die aus beschichteten Geweben mit Überlappschweißnähten bestehen, bzw. hergestellt sind, wodurch diese sehr stabil und wasserdicht ausgeführt werden können.

Mit den bisher bekannten kontinuierlichen Schweißtechniken können Rucksäcke, Taschen oder Behälter hergestellt werden, die meist glatte, bzw. gerade oder nur leicht gebogene Schweißnähte aufweisen.

Insbesondere die Herstellung einer Schweißnaht mit sehr kurvigem Verlauf, welche dem Rucksack, der Tasche oder dem Behälter eine gewünschte designorientierte oder entsprechend funktionelle Form oder Applikation ermöglichen würde, war bisher nicht oder nur mit erheblichem Aufwand oder Einschränkungen möglich, da bisher bekannte Lösungen eine wesentlich höhere Qualitätsstreuung besitzen oder zum Teil sehr schlechte Schweißnahtqualitäten aufweisen.

Ein Rucksack mit einem umlaufenden wasserdichten Reißverschluss ist bereits aus der DE 20 2004 015475 U1 bekannt.

Aufgabe der vorliegenden Erfindung ist es, einen derartigen Rucksack, Tasche oder Behälter dahingehend fortzubilden, dass die genannten Nachteile überwunden werden und komplexere, kurvige, 3-dimensionale Formen bei geschweißten Taschen mit Werkzeugen zu realisieren.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Rucksack, eine Tasche oder ein Behälter aus flexiblen, beschichteten, wasserdichten und/oder nicht wasserdichten Materialien, welche aus Teilen besteht, die mittels Überlappschweißung, geschweißt mit einem Werkzeug, bei welchem die Außenkontur des Werkzeuges den Grundkörperumfang aufspannt und der Rand durch Umlegen Teil der Überlappschweißnaht wird, hergestellt ist, wobei die Überlappungsschweißnaht entlang des Randes des Umfangs verläuft, wobei mindestens ein Bereich des Randes des Umfangs länger ausgeführt ist und die Überlappungsschweißnaht in diesem Bereich entsprechend weiter von der Umfangslinie beabstandet ist.

Diese verlängerten Bereiche, des Umfangs des Randes des Grundkörpers, wenn diese, entlang der Schweißnaht mit einem Deckteil verschweißt werden, bilden einen Bereich des dadurch geschaffenen Rucksack-, Taschen- oder Behälter Vorder-, bzw. Sichtteils.

Nach einer bevorzugten Ausführung der Erfindung werden die beschriebenen Segmente, d.h. Überstände oder verlängerte Randbereiche des Umlaufs an überwiegend geraden oder nur leicht gewölbten, bzw. kurvigen Abschnitten des Umlaufs ausgebildet, wobei bevorzugt zwei oder mehrere solcher durch Randverlängerungen gebildeter Segmente vorgesehen werden.

Eine Ausführungsform der Erfindung sieht vor, dass die Überstände des Randes des Umfanges, welche Segmente für die Verschweißung mit einem Deckteil bilden, paarweise, gespiegelt an den Mittellinien der Rucksack-, Taschen- oder Behältervorderseite vorgesehen sind, wobei auch jede andere, symmetrische oder asymmetrische Anordnungen und Ausführung möglich und vorstellbar ist.

Der Rucksack, Tasche oder Behälter besitzt eine Schweißnaht, die die Form eines Knochens oder einer in der Mitte nicht geschlossenen acht aufweist und somit in der Schweißnaht, im Bereich des aufgeschweißten Deckteiles eine Einschnürung bildet, wobei auch andere Formen, z.B. Runde Formen wie Bälle denkbar und realisierbar sind.

Zwischen diese Einschnürung ist nach einer bevorzugten Ausführungsform der Erfindung ein Längs- Reißverschluss, der wasserdicht ausgeführt sein kann angeordnet, welcher das aufgeschweißte Deckteil in zwei Teile teilt.

Die Segmente bildenden Überstände an dem Umlaufrand des Rucksacks, der Tasche oder des Behälters sind zum Schweißen, bzw. zum Verschweißen mit einem Deckteil idealer Weise ganz oder teilweise weniger als 90° umgelegt und das aufgeschweißte Deckteil besitzt bevorzugt eine gewölbte Form.

Der Rucksack, die Tasche oder der Behälter verfügt bevorzugt über gegenüberliegende Schweißebenen, wobei in einer Ebene die Schweißnaht am Rand des Umfanges verläuft und diese sich in den Bereichen des verlängerten Randes des Umfangs nach innen verengt und eine weitere Schweißebene bildet, indem die Schweißnaht entlang des Umlaufrandes der Verlängerung des Randes verläuft. Die Schweißnaht selbst ist dadurch eine 3-dimensionale Schweißnaht mit unterschiedlichen Neigungen und diese ist bevorzugt als Hochfrequenz Schweißnaht ausgebildet.

Der Rucksack, die Tasche oder der Behälter verfügt nach bevorzugter Ausführung der Erfindung um einen ganz oder teilweise um den Umfang des Grundkörpers umlaufenden Reißverschluss, welcher bevorzugt ein wasserdichter Reißverschluss ist und idealer Weise mit einem Doppelschieber versehen ist.

Nach einer weiteren Ausführung der Erfindung ist der erfindungsgemäße Grundkörper ein offener Körper und das erfindungsgemäße Oberteil als Deckel ausgeführt, welcher auf diverse Arten mit dem Grundkörper verbunden und verschlossen sein kann.

Im Folgenden wird die Erfindung anhand von Zeichnungen beispielhaft näher beschrieben. Dabei zeigen:
Fig. 1 eine Perspektivansicht eines Rucksacks mit verlängerten Randbereichen und aufgeschweißtem Deckteil;
Fig. 2 eine weitere Perspektivdarstellung eines Rucksacks;
Fig. 3 einen Schnitt durch einen Rucksack mit erfindungsgemäßer Schweißnaht.

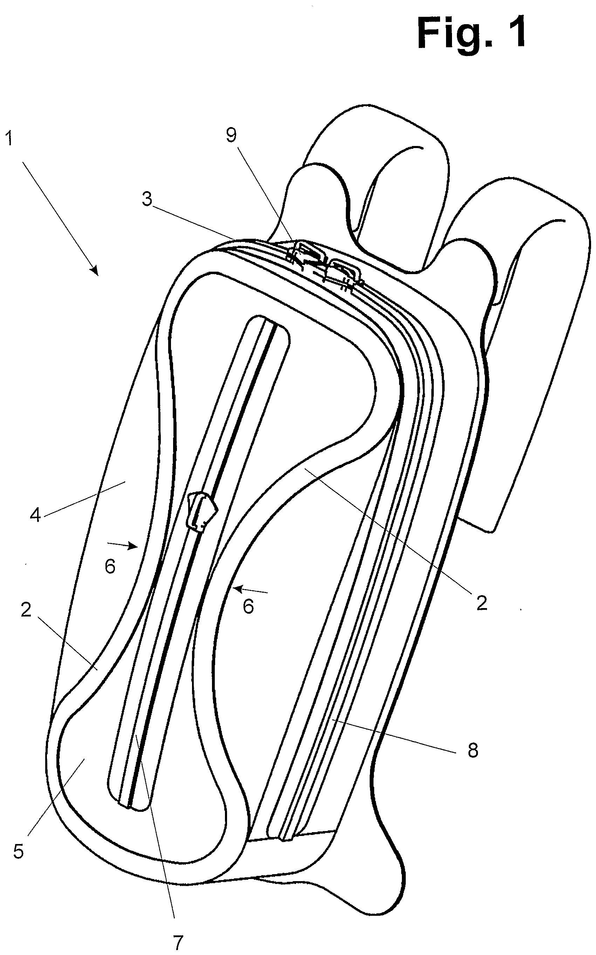

Der Rucksack 1 von Fig. 1 besteht aus einem Grundkörper, welcher mit einem, durch einen umlaufenden Reißverschluss 8 zu öffnenden Oberteil versehen ist.

An der Oberseite des Grundkörpers, über dem umlaufenden Reißverschluss 8 verläuft über den ganzen Umfang des Grundkörpers eine Umlauflinie 3 mit dem Rand des Umlaufs. Dieser Rand ist an definierten Stellen verlängert und ragt deutlich über den Rand des Umlaufs hinaus und wird mit einer Schweißnaht 2 zusammen mit einem Deckteil 5 verschweißt, wobei die Schweißnaht 2 an den Rändem des Deckteils 5 und der Verlängerungen (4) des Umlaufs verläuft und somit die erfindungsgemäße, 3-dimensionale Schweißnaht mit unterschiedlichen Neigungen bildet.

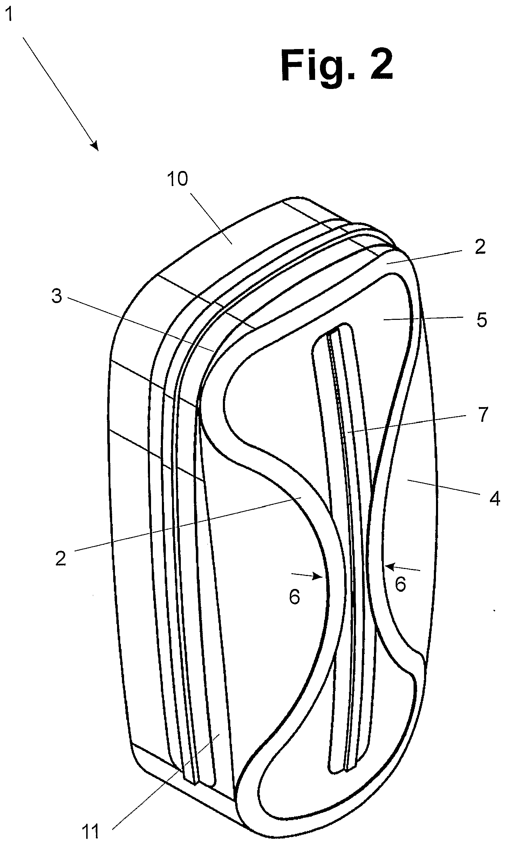

Wie hier und in Fig. 2 gezeigt, bildet die Schweißnaht 2 in der Mitte des Rucksacks eine Einschnürung 6 und in Längsrichtung des Deckteils 5 zwischen der Einschnürung 6 verläuft ein Längsreißverschluss 7, welcher das Deckteil 5 in zwei Teile teilt.

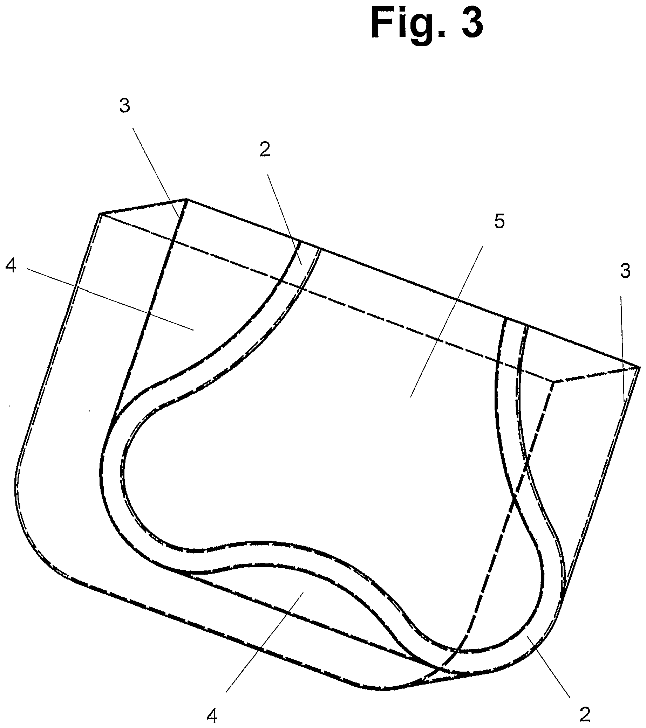

Wie in Fig. 3 zu sehen ist, kann der Umlaufrand 3 auch an mehreren Stellen verlängert ausgeführt sein und neben den ersten Segmenten 4 auch weitere gleich große oder wie hier dargestellt etwas kleinere Segmente 4' ausbilden.

Die Schweißnaht 2 verläuft entsprechend an den Verlängerungen der Überstände 3 des Umlaufrandes 3-dimensional und mit unterschiedlichen Neigungen.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Rucksack, Tasche oder Behälter aus flexiblen, beschichteten, wasserdichten und/oder nicht wasserdichten Materialien, welche aus Teilen besteht, die mittels Überlappschweißung, geschweißt mit einem Werkzeug, bei welchem die Außenkontur des Werkzeuges den Grundkörperumfang aufspannt und der Rand durch Umlegen Teil der Überlappschweißnaht wird, hergestellt ist,
wobei die Überlappungsschweißnaht (2) entlang des Randes des Umfangs (3) verläuft, wobei mindestens ein Bereich des Randes des Umfangs länger ausgeführt ist und die Überlappungsschweißnaht in diesem Bereich (4) entsprechend weiter von der Umfangslinie beabstandet ist, wobei der verlängerte, mindestens eine Bereich (4) des Umlaufrands (3) der Umlaufrand eines Rucksack-, Taschen- oder Behälter- Grundkörpers ist und der variable Überstand dieses Teils einen Bereich (4) des Vorderteils des Rucksackes, der Tasche oder des Behälters (1), entlang der Schweißnaht (2) mit einem zweiten aufgeschweißten Deckteil (5) bildet, **dadurch gekennzeichnet, dass** die Schweißnaht (2) die Form eines Knochens oder einer in der Mitte nicht geschlossenen acht aufweist und somit in der Schweißnaht, im Bereich des aufgeschweißten Deckteils (5) eine Einschnürung (6) bildet.

2. Rucksack, Tasche oder Behälter nach Anspruch 1,
**dadurch gekennzeichnet,**
**dass** sich das durch den Überstand ergebende Segment (4) an einer geraden Stelle der Umfangslinie befindet.

3. Rucksack, Tasche oder Behälter nach Anspruch 1,
**dadurch gekennzeichnet,**
**dass** sich das durch den Überstand ergebende Segment (4) an einer leicht gebogenen Stelle der Umfangslinie befindet.

4. Rucksack, Tasche oder Behälter nach Anspruch 1 bis 3,
**dadurch gekennzeichnet,**
**dass** entlang der Umlauflinie zwei oder mehrere solcher Segmente (4) bildende Überstände am Deckteil angeordnet sind.

5. Rucksack, Tasche oder Behälter nach Anspruch 1 bis 4,
**dadurch gekennzeichnet,**
**dass** diese durch Überstände gebildeten Segmente (4) paarweise, gespiegelt an den Mittellinien des Rucksackvorderteils angeordnet sind.

6. Rucksack, Tasche oder Behälter nach Anspruch 1,
**dadurch gekennzeichnet,**
**dass** die Schweißnaht (2) auf der Vorderseite des Rucksacks durch die Segmente (4) aus dem verlängerten Randbereich eine Einschnürung (6) aufweist.

7. Rucksack, Tasche oder Behälter nach Anspruch 1 bis 6,
**dadurch gekennzeichnet,**
**dass** das aufgeschweißte Deckteil (5) entlang der Einschnürung (6) einen Längsreißverschluss (7) aufweist.

8. Rucksack, Tasche oder Behälter nach Anspruch 7,
**dadurch gekennzeichnet,**
**dass** der Längsreißverschluss (7) in der Einschnürung (6) ausgeführt ist und das Deckteil (5) in zwei Teile teilt.

9. Rucksack, Tasche oder Behälter nach Anspruch 7 und 8
**dadurch gekennzeichnet,**
**dass** der Längsreißverschluss (7) ein wasserdichter Reißverschluss ist.

10. Rucksack, Tasche oder Behälter nach Anspruch 1 bis 9,
**dadurch gekennzeichnet,**
**dass** die Überstände (4) an dem Umlaufrand (3) zum Schweißen ganz oder teilweise weniger als 90° umgelegt werden.

11. Rucksack, Tasche oder Behälter nach Anspruch 1 bis 10,
**dadurch gekennzeichnet,**
**dass** das aufgeschweißte Deckteil (5) gewölbt ausgeführt ist.

12. Rucksack, Tasche oder Behälter nach Anspruch 1 bis 11,
**dadurch gekennzeichnet,**
**dass** die Schweißnähte (2) als Hochfrequenz Schweißnähte ausgeführt sind.

13. Rucksack, Tasche oder Behälter nach Anspruch 1 bis 12,
**dadurch gekennzeichnet,**
**dass** die Überlappungsschweißnaht (2) 3-dimensional, mit unterschiedlichen Neigungen ausgeführt ist.

14. Rucksack, Tasche oder Behälter nach Anspruch 1 bis 13,
**dadurch gekennzeichnet,**
**dass** der Rucksack, die Tasche oder der Behälter (1) über gegenüberliegende Schweißebenen verfügt.

15. Rucksack, Tasche oder Behälter nach Anspruch 1 bis 13,
**dadurch gekennzeichnet,**
**dass** der Rucksack, die Tasche oder der Behälter über gegenüberliegende Schweißebenen verfügt wobei in einer Schweißebene die Schweißnaht (2) am Rand des Umfangs angeordnet ist und in der anderen Ebene die Schweißnaht (2) durch Verlängerung des Randes des Umfangs 3 beabstandet ist.

16. Rucksack, Tasche oder Behälter nach Anspruch 1 bis 15,
**dadurch gekennzeichnet,**
**dass** der Rucksack, die Tasche oder der Behälter mit einem ganz oder teilweise um den Umfang des Grundkörpers umlaufenden Reißverschluss (8) ausgerüstet ist.

17. Rucksack, Tasche oder Behälter nach Anspruch 16,
**dadurch gekennzeichnet,**
**dass** der umlaufende Reißverschluss (8) ein wasserdichter Reißverschluss ist.

18. Rucksack, Tasche oder Behälter nach Anspruch 16 und 17,
**dadurch gekennzeichnet,**
**dass** der umlaufende Reißverschluss (8) mit einem Doppelschieber (9) ausgeführt ist.

19. Rucksack, Tasche oder Behälter nach Anspruch 1 bis 18,
**dadurch gekennzeichnet,**
**dass** der Grundkörper (10) halb offen ausgeführt ist und mit einem Deckel (11) ausgerüstet ist.

## Claims

1. A rucksack, bag or container from flexible, coated, waterproof and/or not waterproof materials, which consists of parts manufactured by means of lap welding, welded with a tool, in which the outer contour of the tool defines the basic body circumference and the edge, by turning it over, becomes part of the lap weld,
wherein the lap weld (2) extends along the edge of the circumference (3), wherein at least one region of the edge of the circumference is configured to be longer and the lap weld, in this region (4), is correspondingly spaced further apart from the circumference line, wherein the lengthened at least one region (4) of the encircling edge (3) is the encircling edge of a basic body of the rucksack, bag or container and the variable overhang of this part forms a region (4) of the front part of the rucksack, bag or container (1) along the weld with a second welded-on cover part (5),
**characterised in that**
the weld (2) has the shape of a bone or an eight not closed in the middle and thus forms a necking (6) in the weld in the region of the welded-on cover part (5).

2. The rucksack, bag or container according to claim 1,
**characterised in that**
the segment (4) resulting from the overhang is located at a straight point of the circumference line.

3. The rucksack, bag or container according to claim 1,
**characterised in that**
the segment (4) resulting from the overhang is located at a slightly bent point of the circumference line.

4. The rucksack, bag or container according to one of claims 1 to 3,
**characterised in that**
overhangs forming two or more such segments (4) are arranged on the cover part along the circumference line.

5. The rucksack, bag or container according to one of claims 1 to 4,
**characterised in that**
these segments (4) formed by overhangs are arranged in pairs, mirrored at the centre lines of the rucksack front part.

6. The rucksack, bag or container according to claim 1,
**characterised in that**
the weld (2) comprises a necking (6) on the front side of the rucksack, due to the segments (4) from the extended edge region.

7. The rucksack, bag or container according to one of claims 1 to 6,
**characterised in that**
the welded-on cover part (5) comprises a longitudinal zipper (7) along the necking (6).

8. The rucksack, bag or container according to claim 7,
**characterised in that**
the longitudinal zipper (7) is formed in the necking (6) and divides the cover part (5) into two parts.

9. The rucksack, bag or container according to claims 7 and 8,
**characterised in that**
the longitudinal zipper (7) is a waterproof zipper.

10. The rucksack, bag or container according to one of claims 1 to 9,
**characterised in that**
the overhangs (4) on the encircling edge (3) are turned over for welding completely or partially by less than 90°.

11. The rucksack, bag or container according to one of claims 1 to 10,
**characterised in that**
the welded-on cover part (5) is configured to be arched.

12. The rucksack, bag or container according to one of claims 1 to 11,
**characterised in that**
the welds (2) are configured as high-frequency welds.

13. The rucksack, bag or container according to one of claims 1 to 12,
**characterised in that**
the lap weld (2) is configured to be 3-dimensional with different inclines.

14. The rucksack, bag or container according to one of claims 1 to 13,
**characterised in that**
the rucksack, bag or container (1) has opposing welding planes.

15. The rucksack, bag or container according to one of claims 1 to 13,
**characterised in that**
the rucksack, bag or container has opposing welding planes, wherein in one welding plane the weld (2) is arranged on the edge of the circumference line and in the other plane the weld (2) is spaced apart due to the extension of the edge of the circumference.

16. The rucksack, bag or container according to one of claims 1 to 15,
**characterised in that**
the rucksack, bag or container is equipped with a zipper (8) extending wholly or partially around the circumference of the basic body.

17. The rucksack, bag or container according to claim 16,
**characterised in that**
the encircling zipper (8) is a waterproof zipper.

18. The rucksack, bag or container according to claims 16 and 17,
**characterised in that**
the encircling zipper (8) is provided with a double slide (9) .

19. The rucksack, bag or container according to one of claims 1 to 18,
**characterised in that**
the basic body (10) is configured to be half-open and provided with a cover (11).

## Revendications

1. Sac à dos, poche ou contenant en matériau souple, revêtu, étanche à l'eau et/ou non étanche à l'eau, qui est composé de pièces qui sont soudées par un soudage en chevauchement avec un outil, le contour extérieur de l'outil serrant la circonférence du corps de base et le bord étant fabriqué par retournement d'une partie du cordon de soudure en chevauchement,
dans lequel le cordon de soudure en chevauchement (2) s'étend le long de la circonférence (3), au moins une partie du bord de la circonférence étant plus longue et le cordon de soudure en chevauchement étant dans cette zone (4) plus espacé en conséquence de la ligne circonférentielle, l'au moins une zone rallongée (4) du bord périphérique (3) étant le bord périphérique d'un corps de sac à dos, de poche ou de contenant et la protubérance variable de cette pièce constituant une zone (4) de la pièce avant du sac à dos, de la poche ou du contenant (1) située le long du cordon de soudure et dotée d'une seconde pièce de recouvrement soudée (5),
**caractérisé en ce que**
le cordon de soudure (2) présente la forme d'un os ou d'un huit non fermé au milieu et constitue ainsi dans le cordon de soudure un étranglement (6) au niveau de la pièce de recouvrement soudée (5).

2. Sac à dos, poche ou contenant selon la revendication 1,
**caractérisé en ce que**
le segment se formant du fait de la protubérance (4) se trouve à un endroit droit de la ligne circonférentielle.

3. Sac à dos, poche ou contenant selon la revendication 1,
**caractérisé en ce que**
le segment se formant du fait de la protubérance (4) se trouve à un endroit légèrement courbé de la ligne circonférentielle.

4. Sac à dos, poche ou contenant selon les revendications 1 à 3,
**caractérisé en ce que**,
le long de la ligne circonférentielle, des protubérances formant deux segments ou plus de ce type (4) sont disposées au niveau de la pièce de recouvrement.

5. Sac à dos, poche ou contenant selon les revendications 1 à 4,
**caractérisé en ce que**
ces segments (4) formés par des protubérances sont disposés par paires en miroir au niveau des lignes centrales de la pièce avant du sac à dos.

6. Sac à dos, poche ou contenant selon la revendication 1,
**caractérisé en ce que**
le cordon de soudure (2), sur la face avant du sac à dos, présente un étranglement (6) dû aux segments (4) de la zone périphérique rallongée.

7. Sac à dos, poche ou contenant selon les revendications 1 à 6,
**caractérisé en ce que**
la pièce de recouvrement soudée (5) présente une fermeture éclair allongée (7) le long de l'étranglement (6).

8. Sac à dos, poche ou contenant selon la revendication 7,
**caractérisé en ce que**
la fermeture éclair allongée (7) est réalisée dans l'étranglement (6) et divise la pièce de recouvrement (5) en deux parties.

9. Sac à dos, poche ou contenant selon les revendications 7 et 8,
**caractérisé en ce que**
la fermeture éclair allongée (7) est une fermeture éclair étanche à l'eau.

10. Sac à dos, poche ou contenant selon les revendications 1 à 9,
**caractérisé en ce que**
les protubérances (4) au niveau du bord périphérique (3) sont retournées totalement ou partiellement de moins de 90° pour le soudage.

11. Sac à dos, poche ou contenant selon les revendications 1 à 10,
**caractérisé en ce que**
la pièce de recouvrement soudée (5) a une conformation bombée.

12. Sac à dos, poche ou contenant selon les revendications 1 à 11,
**caractérisé en ce que**
les cordons de soudure (2) sont réalisés sous forme de cordons de soudure à haute fréquence.

13. Sac à dos, poche ou contenant selon les revendications 1 à 12,
**caractérisé en ce que**
le cordon de soudure en chevauchement (2) est de conformation tridimensionnelle avec différentes inclinaisons.

14. Sac à dos, poche ou contenant selon les revendications 1 à 13,
**caractérisé en ce que**
le sac à dos, la poche ou le contenant (1) dispose de plans de soudure opposés.

15. Sac à dos, poche ou contenant selon les revendications 1 à 13,
**caractérisé en ce que**
le sac à dos, la poche ou le contenant dispose de plans de soudure opposés, le cordon de soudure (2) étant disposé dans un plan de soudure au bord de la circonférence et le cordon de soudure (2) étant dans l'autre plan espacé par rallongement du bord de la circonférence.

16. Sac à dos, poche ou contenant selon les revendications 1 à 15,
**caractérisé en ce que**
le sac à dos, la poche ou le contenant est équipé d'une fermeture éclair (8) entourant totalement ou partiellement la circonférence du corps de base.

17. Sac à dos, poche ou contenant selon la revendication 16,
**caractérisé en ce que**
la fermeture éclair périphérique (8) est une fermeture éclair étanche à l'eau.

18. Sac à dos, poche ou contenant selon les revendications 16 et 17,
**caractérisé en ce que**
la fermeture éclair périphérique (8) est réalisée avec une double tirette (9)

19. Sac à dos, poche ou contenant selon les revendications 1 à 18,
**caractérisé en ce que**
le corps de base (10) a une conformation à demi ouverte et est équipé d'un couvercle (11).
